(19) Europäisches Patentamt
European Patent Office
Office européen des brevets

(11) Veröffentlichungsnummer: **0 017 895**
**B1**

(12) # EUROPÄISCHE PATENTSCHRIFT

(45) Veröffentlichungstag der Patentschrift: **01.12.82**

(51) Int. Cl.³: **C 08 F 10/00,** C 08 F 4/64

(21) Anmeldenummer: **80101859.9**

(22) Anmeldetag: **08.04.80**

(54) **Verfahren zum Herstellen von Homo- und Copolymerisaten von alpha-Monoolefinen.**

(30) Priorität: **11.04.79 DE 2914667**

(43) Veröffentlichungstag der Anmeldung: **29.10.80 Patentblatt 80/22**

(45) Bekanntmachung des Hinweises auf die Patenterteilung: **01.12.82 Patentblatt 82/48**

(84) Benannte Vertragsstaaten: **AT BE DE FR GB IT**

(56) Entgegenhaltungen:

**DE-A-2 052 525**
**DE-A-2 658 939**

(73) Patentinhaber: **BASF Aktiengesellschaft, Carl-Bosch-Strasse 38, D-6700 Ludwigshafen (DE)**

(72) Erfinder: **Staiger, Gerhard, Dr., Virchowstrasse 26, D-6712 Bobenheim-Roxheim 2 (DE)**

**EP 0 017 895 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zum Herstellen von Homo- und Copolymerisaten von alpha-Monoolefinen

Die vorliegende Erfindung liegt im Rahmen eines Verfahrens zum Herstellen von Homo- und Copolymerisaten von $C_2$- bis $C_6$-$\alpha$-Monoolefinen bei Temperaturen von 20 bis 160, insbesondere 50 bis 120°C und Drücken von 1 bis 100, insbesondere 20 bis 70 bar mittels eines Ziegler-Natta-Katalysatorsystems aus

(1) einer modifizierten Titankomponente und

(2) einem Aluminiumalkyl der Formel

X—Al—Y
|
Z

worin stehen

X sowie

Y für eine nicht mehr als 8, insbesondere eine nicht mehr als 4 Kohlenstoffatome aufweisende Alkylgruppe,

Z für eine nicht mehr als 8 Kohlenstoffatome aufweisende Alkylgruppe oder Chlor, insbesondere eine nicht mehr als 4 Kohlenstoffatome aufweisende Alkylgruppe,

mit der Massgabe, dass das Atomverhältnis Titan aus der modifizierten Titankomponente (1) : Aluminium aus dem Aluminiumalkyl (2) 1:0,1 bis 1:500, insbesondere 1:0,2 bis 1:200 beträgt.

Verfahren dieser Gattung sind in einer nahezu unübersehbaren Vielfalt bekannt; ihre Besonderheit liegt jeweils in der speziellen Ausgestaltung des Katalysatorsystems, wofür als typisches Beispiel die DE-OS 26 58 939 zitiert werden kann.

Die speziellen Ausgestaltungen des Katalysatorsystems werden vorgenommen, um bestimmte Ziele zu erreichen, z. B. die folgenden:

(A) Katalysatorsysteme, die bei der Polymerisation von $\alpha$-Monoolefinen, wie insbesondere Propylen, zu Polymerisaten mit einem hohen Anteil an stereoregulärem (= isotaktischem) Polymerisat führen.

(B) Katalysatorsysteme, die eine erhöhte Ausbeute an Polymerisat zu liefern vermögen, nämlich Systeme mit einer erhöhten Produktivität, d. h. Systeme, bei denen die Menge an gebildetem Polymerisat pro Gewichtseinheit des Katalysatorsystems erhöht wird.

(C) Katalysatorsysteme, durch die weniger Halogen in das Polymerisat eingebracht werden; — was zu erreichen ist, indem die Ausbeute gemäss (B) gesteigert wird und/oder ein Titanhalogenid eingesetzt wird, das möglichst wenig Halogen erhält.

(D) Katalysatorsysteme, deren Aktivitätsmaximum über eine möglichst lange Zeit konstant bzw. relativ konstant bleibt; — was für die Katalysatorausbeuten von erheblicher Bedeutung ist.

(E) Katalysatorsysteme, die es erlauben, durch Erhöhung der Polymerisationstemperatur eine Umsatzsteigerung zu bewirken ohne signifikante Minderung der Stereoregularität der Polymerisate; — ein Effekt, der generell erwünscht ist, insbesondere auch bei der Trockenphasenpolymerisation.

(F) Katalysatorsysteme, durch welche — insbesondere bei relativ hohen Polymerisationstemperaturen — die morphologischen Eigenschaften der Polymerisate in bestimmter Weise beeinflusst werden, etwa im Sinne einer einheitlichen Korngrösse und/oder einer Verringerung der Feinstkornanteile und/oder eines hohen Schüttgewichtes und/oder einer guten Rieselfähigkeit; — was z. B. für die technische Beherrschung der Polymerisationssysteme, die Aufarbeitung der Polymerisate und/oder die Verarbeitbarkeit der Polymerisate von Bedeutung sein kann.

(G) Katalysatorsysteme, die einfach und sicher herzustellen und gut handzuhaben sind; — z. B. solche, die sich in (inerten) Kohlenwasserstoff-Hilfsmedien zubereiten lassen.

(H) Katalysatorsysteme, die es ermöglichen, bei der Polymerisation unter Einwirkung eines Molekulargewichtsreglers, wie insbesondere Wasserstoff, mit relativ geringen Mengen an Regler auszukommen; — was z. B. für die Thermodynamik der Verfahrensführung von Bedeutung sein kann.

(I) Katalysatorsysteme, die auf spezielle Polymerisationsverfahren zugeschnitten sind; — etwa solche, die z. B. entweder auf die spezifischen Besonderheiten der Suspensionspolymerisation oder auf die spezifischen Besonderheiten der Trockenphasenpolymerisation abgestimmt sind.

(J) Katalysatorsysteme, die zu Polymerisaten führen, deren Eigenschaftsspektrum sie für das eine oder das andere Anwendungsgebiet besonders geeignet macht.

Nach den bisherigen Erfahrungen gibt es unter den mannigfachen Zielen etliche Ziele, die man durch spezielle Ausgestaltungen des Katalysatorsystems nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muss.

In diesem Rahmen liegt auch die Aufgabenstellung der vorliegenden Erfindung: Eine neue Ausgestaltung eines Katalysatorsystems aufzuzeigen, mit der man gegenüber bekannten Ausgestaltungen — unter vergleichbarer Zielsetzung — bessere Ergebnisse erreichen kann, namentlich bessere Ergebnisse hinsichtlich des oben unter (F) aufgeführten Ziels bei zugleich möglichst geringer Zurücksetzung der unter (A) und (B) genannten Ziele.

Es wurde gefunden, dass die gestellte Aufgabe gelöst werden kann mit einem Katalysatorsystem der eingangs definierten Art, das (a) als eine weitere Komponente (3) einen bestimmten Ester und (b) als modifizierte Titankomponente (1) eine in drei Stufen in besonderer Weise aus speziellen Ausgangsstoffen hergestellte enthält.

Gegenstand der vorliegenden Erfindung ist

dementsprechend ein Verfahren zum Herstellen von Homo- und Copolymerisaten von $C_2$- bis $C_6$-Monoolefinen bei Temperaturen von 20 bis 160, insbesondere 50 bis 120°C und Drücken von 1 bis 100, insbesondere 20 bis 70 bar mittels eines Ziegler-Natta-Katalysatorsystems aus

(1) einer modifizierten Titankomponente und

(2) einem Aluminiumalkyl der Formel

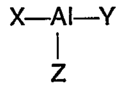

worin stehen

X sowie

Y für eine nicht mehr als 8, insbesondere eine nicht mehr als 4 Kohlenstoffatome aufweisende Alkylgruppe,

Z für eine nicht mehr als 8 Kohlenstoffatome aufweisende Alkylgruppe oder Chlor, insbesondere eine nicht mehr als 4 Kohlenstoffatome aufweisende Alkylgruppe,

mit der Massgabe, dass das Atomverhältnis Titan aus der modifizierten Titankomponente (1) : Aluminium aus dem Aluminiumalkyl (2) 1:0,1 bis 1:500, insbesondere 1:0,2 bis 1:200 beträgt. Das erfindungsgemässe Verfahren ist dadurch gekennzeichnet,

(a) dass das Katalysatorsystem als weitere Komponente enthält

(3) eine Esterkomponente der Formel

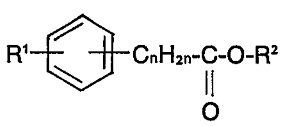

worin stehen

$R^1$ für eine $C_1$- bis $C_4$-Alkoxygruppe, eine $C_1$- bis $C_4$-Alkylgruppe oder Wasserstoff, vorzugsweise eine $C_1$- bis $C_4$-Alkoxygruppe oder eine $C_1$- bis $C_4$-Alkylgruppe, und insbesondere eine $C_1$- bis $C_4$-Alkoxygruppe,

$R^2$ für eine $C_1$- bis $C_4$-Alkylgruppe, insbesondere die Äthylgruppe, und

n für eine ganze Zahl von 0 bis 3, insbesondere die Zahl 0

mit der Massgabe, dass das Molverhältnis Aluminiumalkyl (2) : Esterkomponente (3) 10:8 bis 10:0,5, insbesondere 10:6 bis 10:1 beträgt und

(b) dass die eingesetzte modifizierte Titankomponente (1) eine solche ist, die erhalten wird, indem man zunächst

(1.1) in einer ersten Stufe

(1.1.1) 100 Vol.-Teile Titantetrachlorid mit

(1.1.2) 1 bis 20, insbesondere 3 bis 10 Vol.-Teilen eines Benzolderivats der Formel

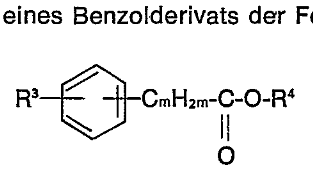

worin stehen

$R^3$ für Wasserstoff, eine $C_1$- bis $C_4$-Alkylgruppe oder eine $C_1$- bis $C_4$-Alkoxygruppe,

$R^4$ für Wasserstoff oder eine $C_1$- bis $C_4$-Alkylgruppe, und

m für eine ganze Zahl von 0 bis 3, insbesondere die Zahl 0,

zusammenbringt und das Zusammengebrachte so lange auf einer Temperatur im Bereich von 30 bis 100, insbesondere 40 bis 70°C hält, bis es als homogene Flüssigkeit vorliegt, dann

(1.2) in einer zweiten Stufe

(1.2.1) die aus Stufe (1.1) resultierende Flüssigkeit mit

(1.2.2) einem, einen Teilchendurchmesser von 0,05 bis 5,0, insbesondere 0,5 bis 3 mm aufweisenden Magnesiumalkoholat der Formel $Mg(OD)_2$, worin D steht für einen einwertigen $C_1$- bis $C_8$-Kohlenwasserstoffrest gesättigt-aliphatischer und/oder aromatischer Natur, vorzugsweise einen einwertigen $C_1$- bis $C_6$-Kohlenwasserstoffrest gesättigt-aliphatischer Natur, und insbesondere einen $C_2$- bis $C_4$-Alkylrest,

zusammenbringt, mit der Massgabe, dass ein Molverhältnis Benzolderivat (1.1.2) aus Stufe (1.1) : Magnesiumalkoholat (1.2.2) von 1:12 bis 1:1, insbesondere 1:8 bis 1:3 gegeben ist, das Zusammengebrachte unter ständiger Durchmischung 0,2 bis 4, insbesondere 0,5 bis 2 Stunden auf einer Temperatur im Bereich von 40 bis 180, insbesondere 80 bis 140°C hält und den dabei resultierenden Feststoff unter Abtrennung der verbleibenden flüssigen Phase isoliert, und schliesslich

(1.3) in einer dritten Stufe

(1.3.1) 100 Gewichtsteile Titantetrachlorid mit

(1.3.2) 0,2 bis 100, insbesondere 2 bis 60 Gewichtsteilen des aus Stufe (1.2) resultierenden Feststoffs sowie — gegebenenfalls und vorteilhafterweise — zusätzlich

(1.3.3) bis zu 15, insbesondere 1 bis 7 Gewichtsteilen eines Benzolderivats der unter (1.1.2) definierten Art

zusammenbringt, das Zusammengebrachte unter ständiger Durchmischung 0,1 bis 5, insbesondere 0,5 bis 2 Stunden auf einer Temperatur im Bereich von 40 bis 180, insbesondere 80 bis 140°C hält und den dabei resultierenden Feststoff — als die modifizierte Titankomponente (1) — unter Abtrennung der verbleibenden flüssigen Phase isoliert.

Zu dem erfindungsgemässen Verfahren ist im einzelnen das Folgende zu bemerken:

Das Polymerisationsverfahren als solches kann — unter Beachtung der kennzeichnenden Besonderheit — in praktisch allen einschlägig üblichen technologischen Ausgestaltungen durchgeführt werden, etwa als diskontinuierliches, taktweises oder kontinuierliches Verfahren, sei es z. B. als Suspensions-Polymerisationsverfahren, Lösungs-Polymerisationsverfahren oder Trockenphasen-Polymerisationsverfahren. Die erwähnten technologischen Ausgestaltungen — mit anderen Worten: die technologischen Varianten der Polymerisation von -Monoolefinen nach Ziegler-Natta — sind aus der Literatur und

Praxis wohlbekannt, so dass sich nähere Ausführungen zu ihnen erübrigen.

Der Vollständigkeit halber ist zu erwähnen, dass sich beim erfindungsgemässen Verfahren auch die Molekulargewichte der Polymerisate durch die einschlägig üblichen Massnahmen regeln lassen, z. B. mittels Reglern, wie insbesondere Wasserstoff.

Des weiteren ist noch festzuhalten, dass beim erfindungsgemässen Verfahren die Komponenten des Katalysatorsystems in mannigfacher Weise in den Polymerisationsraum eingebracht werden können, z. B. (i) die modififizierte Titankomponente (1) als eine Komponente, das Aluminiumalkyl (2) sowie die Esterkomponente (3) als zwei weitere Komponenten alle örtlich gemeinsam, (ii) die gleichen drei Komponenten alle örtlich getrennt voneinander, (iii) die modifizierte Titankomponente (1) einerseits und ein Gemisch aus (2) und (3) andererseits örtlich getrennt voneinander — was insbesondere beim Trockenphasen-Polymerisationsverfahren von Vorteil sein kann — oder (iiii) ein Gemisch aus der modifizierten Titankomponente (1) und der Esterkomponente (3) einerseits und das Aluminiumalkyl (2) andererseits örtlich getrennt voneinander.

Schliesslich ist darauf hinzuweisen, dass die vorteilhaften Eigenschaften des erfindungsgemässen Verfahrens im allgemeinen besonders dann in Erscheinung treten, wenn es als Trockenphasen-Polymerisationsverfahren durchgeführt wird (für dessen Ausgestaltungen typische Beispiele etwa mit den DE-AS 12 17 071, 15 20 307 und 15 20 373 gegeben sind).

Was die stoffliche Seite des neuen Katalysatorsystems betrifft, ist im einzelnen das folgende zu sagen:

(1) Das zur Herstellung der modifizierten Titankomponente (1) einzusetzende Titantetrachlorid (1.1.1) und (1.3.1) sollte ein bei Ziegler-Natta-Katalysatorsystemen übliches sein.

Das gleichfalls einzusetzende Benzolderivat (1.1.2) bzw. — gegebenenfalls — (1.3.3) kann z. B. ein solches sein, in dessen Formel stehen $R^3$ für Wasserstoff oder eine Methyl-, Äthyl-, n-Propyl-, i-Propyl-, n-Butyl-, i-Butyl-, tert.-Butyl-, Methoxy-, Äthoxy-, n-Propoxy- oder n-Butoxygruppe sowie $R^4$ für Wasserstoff, eine Methyl-, Äthyl-, n-Propyl-, i-Propyl-, n-Butyl-, i-Butyl- oder tert.-Butylgruppe. Typische Beispiele für gut geeignete Benzolderivate sind Benzoesäure, Benzoesäureäthylester, p-Toluylsäuremethylester, p-Toluylsäureäthylester, p-Anissäure, p-Anissäureäthylester und p-Anissäure-n-butylester. Die Benzolderivate können eingesetzt werden als Einzelindividuen oder in Form von Gemischen aus zwei oder mehr Einzelindividuen; die in Stufe (1.1) und — gegebenenfalls — Stufe (1.3) einzusetzenden Benzolderivate können gleich oder verschieden sein.

Das zur Herstellung der modifizierten Titankomponente (1) ebenfalls einzusetzende Magnesiumalkoholat (1.2.2) kann ein übliches, der angegebenen Formel gehorchendes sein. Besonders geeignet sind die Alkoholate, die abgeleitet sind vom Äthyl-, n-Propyl-, i-Propyl, n-Butyl-, i-Butyl oder tert.-Butylalkohol. Auch die Alkoholate können als Einzelindividuen oder in Form von Gemischen aus zwei oder mehr Einzelindividuen eingesetzt werden.

Die Herstellung der modifizierten Titankomponente (1) ist einfach und für den Fachmann ohne Erläuterungen möglich. Lediglich zu den Stufen (1.2) und (1.3) ist zu erwähnen, dass die Isolierung des jeweils resultierenden Feststoffs zweckmässigerweise durch Absaugen, und die Abtrennung der jeweils verbleibenden flüssigen Phase zweckmässigerweise durch Waschen mit einem flüssigen Kohlenwasserstoff — bis dieser kein Titantetrachlorid mehr aufnimmt — erfolgt. Der hierbei in Betracht kommende flüssige Kohlenwasserstoff kann ein Kohlenwasserstoff der Art sein, die üblicherweise mit Titankomponenten für Katalysatorsysteme des Ziegler-Natta-Typs ohne Schaden für das Katalysatorsystem bzw. dessen Titankomponente zusammengebracht wird; — z. B. bei der Polymerisation von -Monoolefinen. Als Beispiele für geeignete Kohlenwasserstoffe seien genannt: Pentane, Hexane, Heptane, Benzine und Cyclohexan.

(2) Als Aluminiumalkyle (2) mit der angegebenen Formel kommen die einschlägig üblichen, dieser Formel gehorchenden in Betracht; sie sind aus Literatur und Praxis so wohlbekannt, dass auf sie nicht näher eingegangen zu werden braucht. Als herausragende Vertreter seien beispielsweise genannt Triäthylaluminium sowie Diäthylaluminiumchlorid.

(3) Die das erfindungsgemässe Katalysatorsystem vervollständigende Esterkomponente (3) kann z. B. eine solche sein, in deren Formel stehen $R^1$ für eine Methoxy-, Äthoxy-, n-Propoxy-, i-Propoxy- oder n-Butoxygruppe, eine Methyl-, Äthyl-, n-Propyl-, i-Propyl-, n-Butyl-, i-Butyl- oder tert.-Butylgruppe oder Wasserstoff sowie $R^2$ für eine Methyl-, Äthyl-, n-Propyl-, i-Propyl-, n-Butyl-, i-Butyl- oder tert.-Butylgruppe. Typische Beispiele für gut geeignete Esterkomponenten sind die Anissäureester und insbesondere der p-Anissäureäthylester.

Das erfindungemässe Verfahren erlaubt es, Homo- und Copolymerisate — auch Block-Copolymerisate — von $C_2$- bis $C_6$-$\alpha$-Monoolefinen in vorteilhafter Weise herzustellen, wobei besonders geeignete zu polymerisierende $\alpha$-Monoolefine Propylen, Buten-1 und 4-Methylpenten-1, sowie — zur Copolymerisation — Äthylen sind.

Beispiel 1

Herstellen der modifizierten Titankomponente (1)

Es wird so verfahren, dass man zunächst

(1.1) in einer ersten Stufe

(1.1.1) 100 Vol.-Teile Titantetrachlorid mit

(1.1.2) 5,2 Vol.-Teilen p-Anissäure-n-butylester zusammenbringt und das Zusammengebrachte unter Rühren so lange auf einer Temperatur von etwa 65°C hält bis es unter Auflösung eines anfänglichen Niederschlages, als homogene, rot gefärbte, Flüssigkeit vorliegt; dann

(1.2) in einer zweiten Stufe

(1.2.1) die aus Stufe (1.1) resultierende Flüssigkeit mit

(1.2.2) einem, einen Teilchenduchmesser von 0,5 bis 3 mm aufweisenden Magnesiumäthylat

zusammenbringt, mit der Massgabe, dass ein Molverhältnis Benzolderivat (1.1.2) aus Stufe (1.1) : Magnesiumalkoholat (1.2.2) von 1:4 gegeben ist, das Zusammengebrachte unter ständigem Rühren auf eine Temperatur im Bereich von 130° bis 135°C bringt und etwa 1 Stunde auf dieser Temperatur hält, worauf man den dabei resultierenden Feststoff unter Abtrennung der verbleibenden flüssigen Phase durch Absaugen mittels einer Glasfritte und Waschen mit n-Heptan bis zur Farblosigkeit der Waschflüssigkeit, isoliert, und schliesslich

(1.3) in einer dritten Stufe

(1.3.1) 100 Gewichtsteile Titantetrachlorid mit

(1.3.2) 8 Gewichtsteilen des aus Stufe (1.2) resultierenden Feststoffs

zusammenbringt, das Zusammengebrachte unter ständigem Rühren etwa 1 Stunde auf einer Temperatur im Bereich von 130 bis 135°C hält und den dabei resultierenden Feststoff — als die modifizierte Titankomponente (1) — unter Abtrennung der verbleibenden flüssigen Phase durch Absaugen mittels einer Glasfritte und Waschen mit n-Heptan bis zur Farblosigkeit der Waschflüssigkeit, isoliert.

Polymerisation

Ein Rührgefäss wird mit 500 ml n-Heptan, 0,1 mMol, gerechnet als Titan, der oben beschriebenen modifizierten Titankomponente (1), 10 mMol Aluminiumtriäthyl als Aluminiumalkyl (2) sowie 2 mMol p-Anissäureäthylester als Esterkomponente (3) beschickt.

Die eigentliche Polymerisation wird unter ständigem Rühren bei 60°C während 3 Stunden durchgeführt mit Propylen als Monomer, dessen Druck während der Polymerisation konstant auf 1 bar gehalten wird.

Das Polymerisat wird hierbei mit einer Ergiebigkeit von 667 g Polypropylen pro g Titankomponente (1) erhalten; es weist 5,8% in siedendem n-Heptan löslicher Anteile («Heptanlösliches») auf.

Beispiele 2 bis 7

Es wird jeweils genau so verfahren wie in Beispiel 1, mit jeweils dem einzigen Unterschied, dass beim Herstellen der modifizierten Titankomponente (1) in Stufe (1.1) als Benzolderivat (1.1.2) nicht der p-Anissäure-n-butylester sondern die gleiche Menge des in der nachstehende Tabelle A aufgeführten Benzolderivats eingesetzt wird.

Die dabei erhaltenen Ergebnisse der Polymerisation sind ebenfalls in Tabelle A angegeben.

TABELLE A

| Beispiel | Benzolderivat (1.1.2) in Stufe (1.1) | Ergiebigkeit g/g | Heptanlösliches % |
|---|---|---|---|
| 2 | p-Anissäureäthylester | 465 | 4,2 |
| 3 | Benzoesäure | 596 | 5,6 |
| 4 | Benzoesäureäthylester | 400 | 3,4 |
| 5 | p-Anissäure | 696 | 5,6 |
| 6 | p-Toluylsäuremethylester | 517 | 7,3 |
| 7 | p-Toluylsäureäthylester | 554 | 5,6 |

Beispiel 8

Herstellen der modifizierten Titankomponente (1)

Es wird so verfahren, dass man zunächst

(1.1) in einer ersten Stufe

(1.1.1) 100 Vol.-Teile Titantetrachlorid mit

(1.1.2) 5,2 Vol.-Teilen p-Anissäure-n-butylester

zusammenbringt und das Zusammengebrachte unter Rühren so lange auf einer Temperatur von etwa 65°C hält bis es unter Auflösung eines anfänglichen Niederschlags, als homogene, rot gefärbte, Flüssigkeit vorliegt; dann

(1.2) in einer zweiten Stufe

(1.2.1) die aus Stufe (1.1) resultierende Flüssigkeit mit

(1.2.2) einem, einen Teilchendurchmesser von 0,5 bis 3 mm aufweisenden Magnesiumäthylat

zusammenbringt, mit der Massgabe, dass ein Molverhältnis Benzolderivat (1.1.2) aus Stufe (1.1) : Magnesiumalkoholat (1.2.2) von 1:4 gegeben ist, das Zusammengebrachte unter ständigem Rühren auf eine Temperatur im Bereich von 130° bis 135°C bringt und etwa 1 Stunde auf dieser Temperatur hält, worauf man den dabei resultierenden Feststoff unter Abtrennung der verbleibenden flüssigen Phase durch Absaugen mittels einer Glasfritte und Waschen mit n-Heptan bis zur Farblosigkeit der Waschflüssigkeit, isoliert, und schliesslich

(1.3) in einer dritten Stufe
(1.3.1) 100 Gewichtsteile Titantetrachlorid mit
(1.3.2) 8 Gewichtsteilen des aus Stufe (1.2) resultierenden Feststoffs sowie zusätzlich
(1.3.3) 3 Gewichtsteilen p-Anissäure-n-butylester

zusammenbringt, das Zusammengebrachte unter ständigem Rühren etwa 1 Stunde auf einer Temperatur im Bereich von 130 bis 135°C hält und den dabei resultierenden Feststoff — als die modifizierte Titankomponente (1) — unter Abtrennung der verbleibenden flüssigen Phase durch Absaugen mittels einer Glasfritte und Waschen mit n-Heptan bis zur Farblosigkeit der Waschflüssigkeit, isoliert.

Polymerisation

Ein Rührgefäss wird mit 500 ml n-Heptan, 0,1 mMol, gerechnet als Titan, der oben beschriebenen modifizierten Titankomponente (1), 10 mMol Aluminiumtriäthyl als Aluminiumalkyl (2) sowie 2 mMol p-Anissäureäthylester als Esterkomponente (3) beschickt.

Die eigentliche Polymerisation wird unter ständigem Rühren bei 60°C während 3 Stunden durchgeführt mit Propylen als Monomer, dessen Druck während der Polymerisation konstant auf 1 bar gehalten wird.

Das Polymerisat wird hierbei mit einer Ergiebigkeit von 728 g Polypropylen pro g Titankomponente (1) erhalten; es weist 4,8% in siedendem n-Heptan löslicher Anteile («Heptanlösliches») auf.

Beispiele 9 bis 14

Es wird jeweils genau so verfahren wie in Beispiel 8, mit jeweils den einzigen Unterschieden, dass beim Herstellen der modifizierten Titankomponente (1) sowohl in Stufe (1.1) als auch in Stufe (1.3) als Benzolderivat (1.1.2) bzw. (1.3.3) nicht der p-Anissäure-n-butylester sondern das in der nachstehenden Tabelle B aufgeführte Benzolderivat in den dort angegebenen Mengen eingesetzt wird.

Die dabei erhaltenen Ergebnisse der Polymerisation sind ebenfalls in der Tabelle B angegeben.

TABELLE B

| Beispiel | Benzolderivat (1.1.2) sowie (1.3.3) | Menge (1.1.2) [Vol.-Teile] | Menge (1.3.3) [Gew.-Teile] | Ergiebigkeit [g/g] | Heptanlösliches [%] |
|---|---|---|---|---|---|
| 9 | p-Anissäureäthylester | 5,2 | 2,60 | 669 | 3,7 |
| 10 | Benzoesäure | 5,2 | 1,76 | 822 | 6,4 |
| 11 | Benzoesäureäthylester | 5,2 | 2,17 | 729 | 8,1 |
| 12 | p-Anissäure | 5,2 | 2,19 | 829 | 5,9 |
| 13 | p-Toluylsäuremethylester | 5,2 | 2,17 | 610 | 8,5 |
| 14 | p-Toluylsäureäthylester | 5,2 | 2,36 | 816 | 4,8 |

Beispiel 15

Herstellen der modifizierten Titankomponente (1)

Es wird so verfahren, dass man zunächst
(1.1) in einer ersten Stufe
(1.1.1) 100 Vol.-Teile Titantetrachlorid mit
(1.1.2) 4 Vol.-Teilen Toluylsäureäthylester

zusammenbringt und das Zusammengebrachte unter Rühren so lange auf einer Temperatur von etwa 65°C hält bis es unter Auflösung eines anfänglichen Niederschlags, als homogene, rot gefärbte, Flüssigkeit vorliegt; dann
(1.2) in einer zweiten Stufe
(1.2.1) die aus Stufe (1.1) resultierende Flüssigkeit mit
(1.2.2) einem, einen Teilchendurchmesser von 0,5 bis 3 mm aufweisenden Magnesiumäthylat

zusammenbringt, mit der Massgabe, dass ein Molverhältnis Benzolderivat (1.1.2) aus Stufe (1.1) : Magnesiumalkoholat (1.2.2) von 1:4 gegeben ist, das Zusammengebrachte unter ständigem Rühren auf eine Temperatur im Bereich von 130° bis 135°C bringt und etwa 1 Stunde auf dieser Temperatur hält, worauf man den dabei resultierenden Feststoff unter Abtrennung der verbleibenden flüssigen Phase durch Absaugen mittels einer Glasfritte und Waschen mit n-Heptan bis zur Farblosigkeit der Waschflüssigkeit, isoliert, und schliesslich

(1.3) in einer dritten Stufe
(1.3.1) 100 Gewichtsteile Titantetrachlorid mit
(1.3.2) 8 Gewichtsteilen des aus Stufe (1.2) resultierenden Feststoffs sowie zusätzlich
(1.3.3) 1,44 Gewichtsteilen Benzoesäureäthylester

zusammenbringt, das Zusammengebrachte unter ständigem Rühren etwa 1 Stunde auf einer Temperatur im Bereich von 130 bis 135°C hält und den dabei resultierenden Feststoff — als die modifizierte Titankomponente (1) — unter Abtrennung der verbleibenden flüssigen Phase durch Absaugen mittels einer Glasfritte und Waschen mit n-Heptan bis zur Farblosigkeit der Waschflüssigkeit, isoliert.

Polymerisation

Ein Rührgefäss wird mit 500 ml n-Heptan, 0,1

mMol, gerechnet als Titan, der oben beschriebenen modifizierten Titankomponente (1), 10 mMol Aluminiumtriäthyl als Aluminiumalkyl (2) sowie 2 mMol p-Anissäureäthylester als Esterkomponente (3) beschickt.

Die eigentliche Polymerisation wird unter ständigem Rühren bei 60°C während 3 Stunden durchgeführt mit Propylen als Monomer, dessen Druck während der Polymerisation konstant auf 1 bar gehalten wird.

Das Polymerisat wird hierbei mit einer Ergiebigkeit von 650 g Polypropylen pro g Titankomponente (1) erhalten; es weist 5,7% in siedendem n-Heptan löslicher Anteile («Heptanlösliches») auf.

**Patentanspruch**

Verfahren zum Herstellen von Homo- und Copolymerisaten von $C_2$- bis $C_6$-$\alpha$-Monoolefinen bei Temperaturen von 20 bis 160°C und Drücken von 1 bis 100 bar mittels eines Ziegler-Natta-Katalysatorsystems aus

(1) einer modifizierten Titankomponente und

(2) einem Aluminiumalkyl der Formel

$$\begin{array}{c} X{-}Al{-}Y \\ | \\ Z \end{array}$$

worin stehen

X sowie

Y für eine nicht mehr als 8 Kohlenstoffatome aufweisende Alkylgruppe,

Z für eine nicht mehr als 8 Kohlenstoffatome aufweisende Alkylgruppe oder Chlor,

mit der Massgabe, dass das Atomverhältnis Titan aus der modifizierten Titankomponente (1) : Aluminium aus dem Aluminiumalkyl (2) 1 : 0,1 bis 1 : 500 beträgt,

dadurch gekennzeichnet,

(a) dass das Katalysatorsystem als weitere Komponente enthält

(3) eine Esterkomponente der Formel

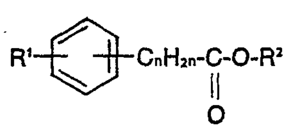

worin stehen

$R^1$ für eine $C_1$- bis $C_4$-Alkoxygruppe, eine $C_1$- bis $C_4$-Alkylgruppe oder Wasserstoff,

$R^2$ für eine $C_1$- bis $C_4$-Alkylgruppe,

n für die ganze Zahl von 0 bis 3,

mit der Massgabe, dass das Molverhältnis Aluminiumalkyl (2) : Esterkomponente (3) 10:8 bis 10:0,5 beträgt und

(b), dass die eingesetzte modifizierte Titankomponente (1) eine solche ist, die erhalten wird, indem man zunächst

(1.1) in einer ersten Stufe

(1.1.1) 100 Vol.-Teile Titantetrachorid mit

(1.1.2) 1 bis 20 Vol.-Teilen eines Benzolderivats der Formel

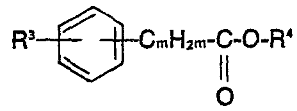

worin stehen

$R^3$ für Wasserstoff, eine $C_1$- bis $C_4$-Alkylgruppe oder eine $C_1$- bis $C_4$-Alkoxygruppe,

$R^4$ für Wasserstoff oder eine $C_1$- bis $C_4$-Alkylgruppe, und

m für eine ganze Zahl von 0 bis 3,

zusammenbringt und das Zusammengebrachte so lange auf einer Temperatur im Bereich von 30 bis 100°C hält, bis es als homogene Flüssigkeit vorliegt; dann

(1.2) in einer zweiten Stufe

(1.2.1) die aus Stufe (1.1) resultierende Flüssigkeit mit

(1.2.2) einem, einen Teilchendurchmesser von 0,05 bis 5,0 mm aufweisenden Magnesiumalkoholat der Formel $Mg(OD)_2$, worin D steht für einen einwertigen $C_1$- bis $C_8$-Kohlenwasserstoffrest gesättigt-aliphatischer und/oder aromatischer Natur,

zusammenbringt, mit der Massgabe, dass ein Molverhältnis Benzolderivat (1.1.2) aus Stufe (1.1) : Magnesiumalkoholat (1.2.2) von 1:12 bis 1:1 gegeben ist, das Zusammengebrachte unter ständiger Durchmischung 0,2 bis 4 Stunden auf einer Temperatur im Bereich von 40 bis 180°C hält und den dabei resultierenden Feststoff unter Abtrennung der verbleibenden flüssigen Phase isoliert, und schliesslich

(1.3) in einer dritten Stufe

(1.3.1) 100 Gewichtsteile Titantetrachlorid mit

(1.3.2) 0,2 bis 100 Gewichtsteilen des aus Stufe (1.2) resultierenden Feststoffs sowie — gegebenenfalls — zusätzlich

(1.3.3) bis zu 15 Gewichtsteilen eines Benzolderivats der unter (1.1.2) definierten Art

zusammenbringt, das Zusammengebrachte unter ständiger Durchmischung 0,1 bis 5 Stunden auf einer Temperatur im Bereich von 40 bis 180°C hält und den dabei resultierenden Feststoff — als die modifizierte Titankomponente (1) — unter Abtrennung der verbleibenden flüssigen Phase isoliert.

**Revendication**

Procédé de préparation d'homo- et de co-polymères d'$\alpha$-mono-oléfines en $C_2$ à $C_6$ à des températures de 20 à 160°C sous des pressions de 1 à 100 bars à l'aide d'un système catalytique selon Ziegler-Natta, constitué de

(1) une composante au titane modifiée et

(2) un alcoyl-aluminium de la formule

$$\begin{array}{c} X{-}Al{-}Y \\ | \\ Z \end{array}$$

dans laquelle

X et

Y désignent un radical alcoyle ne comportant pas plus de 8 atomes de carbone et

Z désigne un radical alcoyle ne comportant pas plus de 8 atomes de carbone ou un atome de chlore,

avec la condition que le rapport atomique entre le titane de la composante au titane modifiée (1) et l'aluminium de l'alcoyl-aluminium (2) se situe entre 1 : 0,1 et 1 : 500, caractérisé en ce que:

a) le système catalytique contient comme composante supplémentaire

(3) une composante ester de la formule

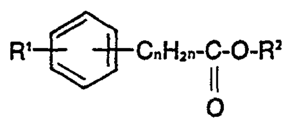

dans laquelle

$R^1$ désigne un radical alcoxy en $C_1$ à $C_4$ ou un radical alcoyle en $C_1$ à $C_4$ ou un atome d'hydrogène,

$R^2$ désigne un radical alcoyle en $C_1$ à $C_4$ et

n est un nombre entier valant de 0 à 3,

avec la condition que le rapport molaire de l'alcoyl-aluminium (2) à la composante ester (3) se situe entre 10 : 8 et 10 : 0,5 et

b) la composante au titane modifiée (1) mise en œuvre a été obtenue en mélangeant:

dans un premier stade (1.1) :

(1.1.1) 100 parties en volume de tétrachlorure de titane et

(1.1.2) 1 à 20 parties en volume d'un dérivé benzénique de la formule

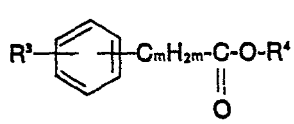

dans laquelle

$R^3$ désigne un atome d'hydrogène, un radical alcoyle en $C_1$ à $C_4$ ou un radical alcoxy en $C_1$ à $C_4$,

$R^4$ désigne un atome d'hydrogène ou un radical alcoyle en $C_1$ à $C_4$ et

m est un nombre entier valant de 0 à 3,

et en maintenant ce mélange à une température comprise dans la gamme de 30 à 100°C jusqu'à l'obtention d'un liquide homogène; puis,

dans un deuxième stade (1.2) :

(1.2.1) le liquide obtenu dans le stade (1.1) avec

(1.2.2) un alcoolate de magnésium de la formule $Mg(OD)_2$, dans laquelle D désigne un groupe hydrocarboné monovalent en $C_1$ à $C_8$ de nature saturée-aliphatique et(ou) aromatique, sous forme de particules d'un diamètre de 0,05 à 5,0 mm,

avec la condition que le rapport molaire du dérivé benzénique (1.1.2) du stade (1.1) à l'alcoolate de magnésium (1.2.2) se situe entre 1 : 12 et 1 : 1,

en maintenant ce mélange pendant 0,2 à 4 heures, sous agitation continue, à une température dans la gamme de 40 à 180°C et en isolant ensuite la matière solide formée par séparation de la phase liquide résiduelle; puis,

dans un troisième stade (1.3) :

(1.3.1) 100 parties en poids de tétrachlorure de titane et

(1.3.2) 0,2 à 100 parties en poids de la matière solide obtenue dans le stade (1.2), ainsi qu'éventuellement

(1.3.3) jusqu'à 15 parties en poids d'un dérivé benzénique du genre défini sub (1.1.2),

en maintenant ce mélange pendant 0,1 à 5 heures, sous agitation continue, à une température dans la gamme de 40 à 180°C et en isolant ensuite la matière solide formée, consistant la composante au titane modifiée (1), par séparation de la phase liquide résiduelle.

**Claim**

A process for the preparation of homopolymers and copolymers of $C_2$-$C_6$-$\alpha$-monoolefins at from 20° to 160°C, under a pressure of from 1 to 100 bar, by means of a Ziegler-Natta catalyst system comprising

(1) a modified titanium component and

(2) an aluminum-alkyl of the formula

X—Al—Y
|
Z

where

X and Y are each alkyl of not more than 8 carbon atoms, and

Z is alkyl of not more than 8 carbon atoms or is chlorine,

with the proviso that the atomic ratio of titanium in the modified titanium component (1) to aluminium in the aluminiumalkyl (2) is from 1:0.1 to 1:500, characterized in that (a) the catalyst system contains, as an additional component, (3) an ester component of the formula

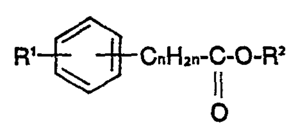

where

$R^1$ is $C_1$-$C_4$-alkoxy, $C_1$-$C_4$-alkyl or hydrogen,

$R_2$ is $C_1$-$C_4$-alkyl and

n is an integer from 0 to 3,

with the proviso that the molar ratio of aluminum-alkyl (2) to ester component (3) is from 10:8 to 10:0.5, and (b) the modified titanium component (1) employed is one which is obtained by initially

(1.1) in a first stage bringing together

(1.1.1) 100 parts by volume of titanium tetrachloride with (1.1.2) from 1 to 20 parts by volume of a benzene derivative of the formula

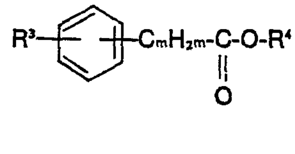

where

$R^3$ is hydrogen, $C_1$-$C_4$-alkyl or $C_1$ or $C_4$-alkoxy,
$R^4$ is hydrogen or $C_1$-$C_4$-alkyl and
m is an integer from 0 to 3,

and keeping the mixture at from 30° to 100°C until it is a homogeneous liquid, thereafter

(1.2) in a second stage bringing together
(1.2.1) the liquid resulting from stage (1.1) with
(1.2.2) a magnesium alcoholate of the formula $Mg(OD)_2$,

where D is a monovalent hydrocarbon radical of 1 to 8 carbon atoms of a saturated aliphatic and/or aromatic nature, the magnesium alcoholate having a particle diameter of from 0.05 to 5.0 mm,

with the proviso that the molar ratio of benzene derivative (1.1.2) from stage (1.1) to magnesium alcoholate (1.2.2) is from 1:12 to 1:1, keeping the mixture at from 40° to 180°C for from 0.2 to 4 hours, with constant mixing, and isolating the resulting solid by separating off the liquid phase which remains, and finally

(1.3) in a third stage bringing together
(1.3.1) 100 parts by weight of titanium tetrachloride with
(1.3.2) from 0.2 to 100 parts by weight of the solid resulting from stage (1.2), and optionally also
(1.3.3) up to 15 parts by weight of a benzene derivative of the type defined under (1.1.2),

keeping the mixture at from 40° to 180°C for from 0.1 to 5 hours, with constant mixing, and isolating the resulting solid — in the form of the liquid phase which remains.